# EUROPEAN PATENT SPECIFICATION

(11) **EP 3 199 571 B1**
(45) Date of publication and mention of the grant of the patent: **05.06.2019**
(21) Application number: 15843166.8
(22) Date of filing: 24.09.2015
(51) Int. Cl.: C08G 81/00, B60C 1/00, C08G 69/00, C08G 69/36, C08G 69/14, C08G 69/40

(54) **TIRE**
REIFEN
PNEUMATIQUE

(30) Priority: 24.09.2014 JP 2014193428
(43) Date of publication of application: 02.08.2017
(73) Proprietor: Bridgestone Corporation, Tokyo 104-8340 (JP)
(72) Inventor: KYO, Soichi, Tokyo 104-8340 (JP)
(74) Representative: Oxley, Robin John George
(86) International application number: PCT/JP2015/076982
(87) International publication number: WO 2016/047710

(56) References cited:
- WO-A1-2014/104864
- WO-A2-2013/048206
- JP-A- H0 687 962
- JP-A- S5 819 342
- JP-A- S5 993 742
- JP-A- 2006 316 219
- JP-A- 2009 526 892
- JP-A- 2013 528 666
- JP-A- 2014 037 551
- JP-B1- S4 512 150
- US-A- 4 519 432
- US-A- 4 703 086
- US-A- 5 283 289
- US-A- 5 342 918

## Description

### Technical Field

The present invention relates to a tire to be mounted on a rim, and particularly relates to a tire in which at least a part of a tire case is made of a resinous material.

### Background Art

Conventionally, pneumatic tires composed of, for example, rubber, an organic fiber material and a steel member have been used for vehicles such as passenger cars.

In recent years, use in tire materials of resin materials, particularly thermoplastic resins and thermoplastic elastomers, has been studied since resins are lightweight, are highly shapeable, and can be easily recycled. These thermoplastic polymer materials (such as thermoplastic elastomers or thermoplastic resin materials) have many advantages from the viewpoint of improving productivity, such as being injection-moldable. For example, a tire in which a polyamide-based thermoplastic elastomer is used as a thermoplastic polymer material is proposed in Japanese Patent Application Laid-Open (JP-A) No. 2012-46030.

### SUMMARY OF INVENTION

### Technical Problem

Tires in which thermoplastic polymer materials are used can be manufactured more easily at lower cost than conventional tires made of rubber. However, there is room for improvement from the viewpoint of low rolling resistance (hereinafter occasionally referred to also as "low-loss property"). Also, it is desirable that tires in which thermoplastic polymer materials are used are mountable on rims, and can be excellently fitted to rims (i.e., have excellent fittability to rims) such that internal air does not leak when the tires are mounted on rims.

Therefore, for the tires made of thermoplastic polymer materials, there is a demand that the low-loss property be excellent and that the tires can be excellently fitted to rims, and that both of these are provided together.

In view of the above circumstances, an embodiment of the present invention aims to provide a tire that is formed using a resinous material and that achieves both of excellent low-loss property and excellent fittability to a rim.

### Solution to Problem

[1] A tire including a circular tire frame formed from a resinous material,
   the resinous material comprising a resin component,
   the resin component including a thermoplastic elastomer,
   the thermoplastic elastomer including: a hard segment that does not include an aromatic ring; a soft segment; and a connection portion that includes an aromatic ring and that connects the hard segment and the soft segment,
   the hard segment comprising a polyamide structure,
   the soft segment comprising a polyether structure, and
   the resin component being comprised in an amount of 50% by mass or more with respect to a total amount of the resinous material.

### Advantageous Effects of Invention

According to one embodiment of the present invention, a tire that is formed using a resinous material, and that achieves both an excellent low-loss property and excellent fittability to a rim, can be provided.

### BRIEF DESCRIPTION OF THE DRAWINGS

FIG. 1A is a perspective view illustrating a cross-section of a part of a tire according to one embodiment of the invention.
FIG. 1B is a cross-sectional view of a bead portion mounted on a rim.
FIG. 2 is a cross-sectional view taken along a tire rotation axis that illustrates a state in which a reinforcing cord is embedded in a crown portion of a tire case of a tire according to a first embodiment.

### DESCRIPTION OF EMBODIMENTS

The tire according to an embodiment of the invention has a circular tire frame formed from a resinous material including a thermoplastic elastomer. The thermoplastic elastomer includes: a hard segment that does not include an aromatic ring; a soft segment; and a connection portion that includes an aromatic ring and that connects the hard segment and the soft segment.

Since the tire frame contains a thermoplastic elastomer having the above configuration, the tire has both an excellent low-loss property and excellent fittability to a rim. Although the reason behind the above is not very clear, it is presumed as follows.

Since a connection portion in the thermoplastic elastomer used for forming the tire has an aromatic ring, it is conceived that the connection portions are attracted to each other owing to the interaction of π electrons of the aromatic rings, leading to aggregation of the hard segments and promotion of crystallization of the hard segments. When the hard segments are aggregated, the domain size of hard segments increases, whereby an interface between a hard segment domain and a soft segment domain in the whole thermoplastic elastomer reduces.

In this regard, at an interface between a hard segment domain and a soft segment domain, a mixed region of a hard segment and a soft segment (hereinafter referred to as an "intermediate phase") may be formed. When a region in which an intermediate phase is formed becomes large, it becomes difficult for a hard segment and a soft segment to exhibit their respective characteristics, and therefore it is conceivable that the low-loss property of a tire becomes difficult to obtain.

On the other hand, in the case of the tire described in the specification, an interface between a hard segment domain and a soft segment domain is narrower, and a region in which an intermediate phase is formed becomes smaller, as compared to a case in which a connection portion contains no aromatic ring, and it is believed that low-loss property of the tire is therefore achieved.

Further it is conceived that, since a connection portion of a thermoplastic elastomer contains an aromatic ring having a high rigidity in the tire, the elastic modulus of the tire tends to become higher as compared to a case in which a connection portion contains no aromatic ring, and that an elastic modulus suitable for rim mounting may therefore be obtained easier.

As described above, it is presumed that the tire utilizing a thermoplastic elastomer in which a connection portion contains an aromatic ring has both an excellent low-loss property and excellent fittability to a rim.

A method in which a proportion of a soft segment is increased in a mass ratio between a hard segment and a soft segment, to regulate a rolling resistance to a lower level, is also conceivable. However, when the proportion of a soft segment is increased, the elastic modulus tends to be lower, and the fittability to a rim of an obtained tire tends to be inferior. Meanwhile, when a proportion of a hard segment is increased in order to obtain an elastic modulus suitable for rim mounting, the rolling resistance tends to increase. Therefore, it is difficult to improve both the low-loss property and the fittability to a rim by adjusting solely the mass ratio of the hard segment and the soft segment. In contrast, in the case of the tire described herein, a tire having both an excellent low-loss property and excellent fittability to a rim is obtained, by using a thermoplastic elastomer including a connection portion containing an aromatic ring.

Since a connection portion of a thermoplastic elastomer in the tire contains an aromatic ring, a tire having a higher heat resistance is obtained as compared to a case in which a connection portion contains no aromatic ring.

It is conceivable that a thermoplastic elastomer in which not only a connection portion but also a hard segment contains an aromatic ring (especially, a thermoplastic elastomer in which a polymer forming a hard segment is formed using a monomer containing an aromatic ring) is susceptible to deterioration by light as compared to a case in which a hard segment contains no aromatic ring.

Furthermore, when a hard segment contains an aromatic ring, it is conceivable that the rigidity of a hard segment increases and a molecular chain is hardly folded, and that a hard segment becomes hardly crystallizable due to steric hindrance of the aromatic ring, resulting in a low elastic modulus of a thermoplastic elastomer and decrease in the fittability to a rim of a tire.

In contrast, it is presumed that, since a thermoplastic elastomer in which a hard segment contains no aromatic ring and a connection portion contains an aromatic ring is used in the tire described in the specification, both of excellent low-loss property and excellent fittability to a rim are achieved, and excellent light resistance is achieved as compared with a case in which a hard segment contains an aromatic ring.

As used herein, a numerical range indicated using "to" means a range including the figures written before and after "to" as the minimum value and the maximum value, respectively.

In a case in which a plurality of substances corresponding to each component are present in a composition described herein, the amount of each component in the composition means the total amount of the plurality of substances present in the composition, unless otherwise specified.

### << Resinous Material >>

### < Thermoplastic Elastomer >

As mentioned above, the tire has a tire frame formed from a resinous material. The thermoplastic elastomer as the resinous material includes: a hard segment containing no aromatic ring; a soft segment; and a connection portion that contains an aromatic ring and that connects the hard segment and the soft segment.

The resinous material may further contain a thermoplastic elastomer other than the above-described thermoplastic elastomer or any optional component. As used herein, the term "resin" has a concept encompassing a thermoplastic resin and a thermosetting resin, but does not include natural rubber.

A hard segment is a molecular motion restraining component which prevents plastic deformation of the thermoplastic elastomer, and, for example, is composed of a polymer not containing an aromatic ring among the polymers having a higher crystallinity and a higher melting point as compared to a soft segment.

The polymer forming a part or the whole of a hard segment is not particularly limited as long as it is a polymer containing no aromatic ring and comprising a polyamide structure, and may be selected according to the purpose. Specific examples of a polymer forming a part or the whole of a hard segment include a polyamide.

A soft segment is a flexible component exhibiting rubber elasticity, and, for example, is composed of a polymer having a lower crystallinity and a lower glass transition temperature as compared to a hard segment. A soft segment preferably contains no aromatic ring, from the viewpoint of light resistance.

The polymer forming a part or the whole of a soft segment is not particularly limited, as long as it comprises a polyether structure, and may be selected according to the type of a hard segment or a purpose. Examples thereof include a polyether.

A connection portion is a component that connects a hard segment and a soft segment, as described above, and contains an aromatic ring. Examples of a connection portion include a structural unit derived from a chain extender containing an aromatic ring. Namely, a connection portion may be formed, for example, by bonding a chain extender containing an aromatic ring to both a terminal of a hard segment and a terminal of a soft segment.

The chain extender containing an aromatic ring is not particularly limited as long as it is a compound having an aromatic ring, a group capable of binding to a terminal group of a hard segment, and a group capable of binding to a terminal group of a soft segment.

Examples of an aromatic ring include an unsaturated hydrocarbon ring (aromatic hydrocarbon ring), in which carbon atoms having π electrons are aligned circularly. Specific examples of aromatic ring include a monocyclic aromatic ring such as benzene (i.e., aromatic ring having 6 carbon atoms) or a [4n+2] annulene (wherein n is from 1 to 4), and a polycyclic aromatic ring such as naphthalene, anthracene, pyrene, triphenylene, porphyrin, azulene, indene, or fluorene.

The aromatic ring may be, in addition to the aromatic hydrocarbon rings described above, an aromatic heterocyclic ring in which at least one of the carbon atoms constituting an aromatic hydrocarbon ring is substituted by a heteroatom. The heteroatom is an atom other than the carbon atoms constituting a ring structure, and specific examples thereof include a nitrogen atom, an oxygen atom, and a sulfur atom. The number of carbon atoms replaced by heteroatom(s) maybe, for example, from 1 to 4.

The aromatic ring may have a substituent. In other words, when a connection portion is derived from a chain extender containing an aromatic ring, the chain extender containing an aromatic ring may further have a substituent, in addition to a group capable of binding to a terminal group of a hard segment and a group capable of binding to a terminal group of a soft segment. Examples of the substituent include an alkyl group, an alkoxy group, and an oxygen atom (=O).

A connection portion may contain only 1 type of the aromatic rings, or contain 2 or more type thereof.

Among the above-mentioned aromatic rings, a connection portion preferably contains an aromatic ring containing a benzene ring, more preferably contains an aromatic ring containing an unsubstituted benzene ring, further preferably contains at least one selected from the group consisting of an aromatic ring which is a benzene ring and a polycyclic aromatic ring formed from plural benzene rings, and especially preferably contains a polycyclic aromatic ring formed from plural benzene rings.

The number of aromatic rings included in a connection portion is not particularly limited, and, for example, may be from 1 to 4, preferably from 2 to 4, and more preferably from 3 to 4.

In this regard, the number of aromatic rings is a total number of the aromatic rings included in one connection portion. For example, when only one biphenyl structure is included as an aromatic ring in one connection portion, the number of aromatic rings is deemed to be 2. Similarly, when only one anthracene structure is included in one connection portion, the number of aromatic rings is deemed to be 3, and when only one porphyrin structure is included in one connection portion, the number of aromatic rings is deemed to be 4.

When the number of aromatic rings is 2 or more, the aromatic rings may form a condensed aromatic ring in which 2 atoms of the atoms constituting one ring may be shared with another ring, as in a case of the polycyclic aromatic ring; may form a spiro aromatic ring in which an atom of the atoms constituting one ring may be shared with another ring; may be in a form in which one ring is bonded to another ring via a single bond, as in a case of biphenyl; or may be in a form in which one ring is bonded to another ring via a linking group. Among these, a connection portion preferably contains a condensed ring.

Examples of a linking group include an alkylene group, a carbonyl group, an ether bond, an ester bond, a sulfide bond, an amide bond, a urethane bond, a urea bond, and a combination thereof.

When a connection portion is derived from a chain extender containing an aromatic ring, the chain extender containing an aromatic ring has a group capable of binding to a terminal group of a hard segment and a group capable of binding to a terminal group of a soft segment, as described above. The group capable of binding to a terminal group of a hard segment or the group capable of binding to a terminal group of a soft segment may bond directly to an aromatic ring, or may bond to an aromatic ring via a linking group, respectively. Examples of a linking group are the same as the above-mentioned linking groups.

The group capable of binding to a terminal group of a hard segment and the group capable of binding to a terminal group of a soft segment may be selected appropriately depending on the terminal group of a hard segment or the terminal group of a soft segment, respectively. Specific examples of thereof include a carboxy group, an amino group, a hydroxyl group, and an isocyanate group.

Specific examples of a chain extender containing an aromatic ring include an aromatic diamine, an aromatic dicarboxylic acid, an aromatic diol, and an aromatic diisocyanate. An aromatic diamine or an aromatic dicarboxylic acid is preferable.

In other words, it is preferable that the connection portion is a structural unit derived from an aromatic diamine or a structural unit derived from an aromatic dicarboxylic acid.

Examples of a chain extender containing an aromatic ring include a compound represented by the following Formula (A).

F^{H}-R^{H}-Ar-R^{S}-F^{S} Formula (A)

In Formula (A), F^{H} represents a group capable of binding to a terminal group of a hard segment, F^{S} represents a group capable of binding to a terminal group of a soft segment, R^{H} and R^{S} independently represent a single bond or a straight-chain alkylene group having from 1 to 4 carbon atoms, and Ar represents a linking group containing an aromatic ring.

The definitions of the group represented by F^{H} (hereinafter occasionally also referred to as "group F^{H}") in Formula (A) and the group represented by F^{S} (hereinafter occasionally also referred to as "group F^{S}") in Formula (A) are as described above. The definition of the aromatic ring contained in a linking group represented by Ar (hereinafter occasionally also referred to as "linking group Ar") in Formula (A) is also as described above. Furthermore, the number of aromatic rings contained in a linking group Ar is as described in relation with the number of aromatic rings as described above.

R^{H} and R^{S} in Formula (A) each independently represent preferably a single bond or a straight-chain alkylene group having from 1 to 2 carbon atoms, more preferably a single bond or a methylene group, and further preferably a single bond.

It is desirable that each of R^{H} and R^{S} in Formula (A) is directly bonded to an aromatic ring contained in a linking group Ar. When a linking group Ar contains 2 or more aromatic rings, R^{H} and R^{S} in Formula (A) may be directly bonded to the same aromatic ring, or may be directly bonded to different aromatic rings, respectively.

When a linking group Ar contains 2 or more aromatic rings, 2 or more of the aromatic rings may form a condensed ring, may form a spiro ring, may bond to each other via a single bond, or may bond to each other via a linking group. When 2 or more aromatic rings are bonded to each other via a linking group, the number of atoms that link the aromatic rings (i.e., the minimum number of atoms that link one aromatic ring with the other aromatic ring(s)) is preferably 4 or less, more preferably 2 or less, and further preferably 1 or less.

Hereinbelow, specific examples of a structure of a connection portion in a case in which a compound according to Formula (A), in which group F^{H} and group F^{S} are both carboxy groups, is used as a chain extender are shown, among various specific examples of a structure of a connection portion. However, the connection portion is not limited thereto. The symbol "*" in the following structures indicates a position at which a hard segment or a soft segment is bonded, and indicates a state in which a terminal carboxy group of a chain extender (group F^{H} or group F^{S}) has reacted with an amino group, which is a terminal group of a hard segment or a soft segment, to form an amide bond.

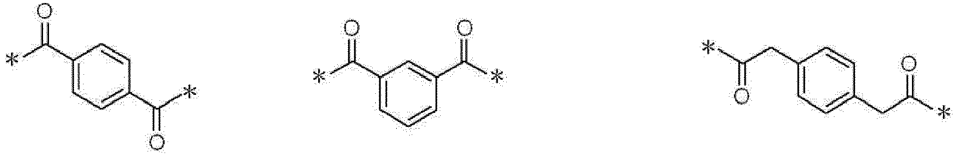

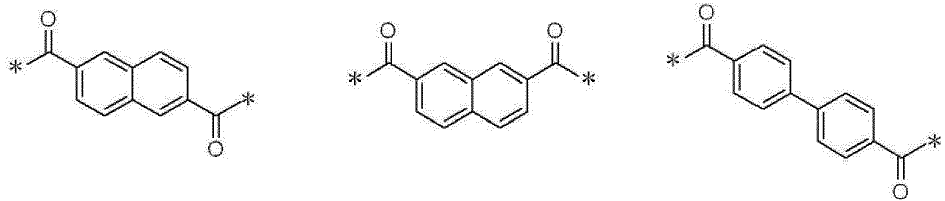

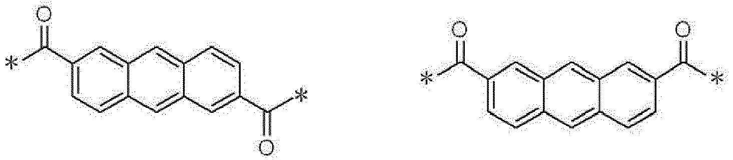

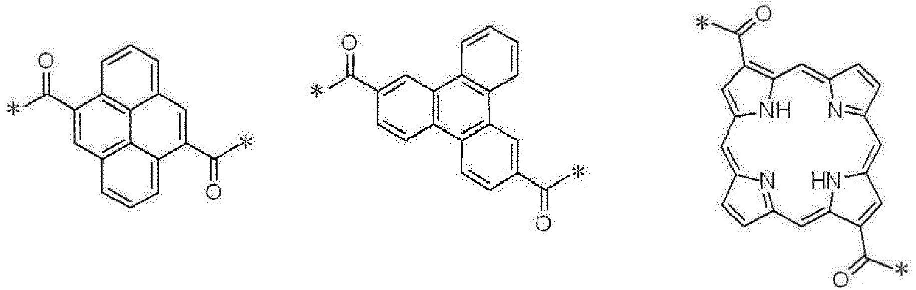

Examples of a thermoplastic elastomer applicable to the invention include polyamide-based thermoplastic elastomer (or thermoplastic amid elastomer; TPA).

### (Polyamide-based Thermoplastic Elastomer)

As used herein, the term "polyamide-based thermoplastic elastomer" means a thermoplastic elastomer consisting of a copolymer of a polymer which forms a part or the whole of a crystalline hard segment having a high melting point and a polymer which forms a part or the whole of a non-crystalline soft segment having a low glass transition temperature, in which the polymer which forms a part or the whole of a hard segment has an amide bond (-CONH-) in a backbone thereof.

Examples of the polyamide-based thermoplastic elastomers include a material in which a polyamide forms a part or the whole a hard segment which is crystalline and has a high melting point, and another polymer (for example, polyester or polyether) forms a part or the whole of a soft segment which is non-crystalline and has a low glass transition temperature.

### - Hard Segment -

Examples of polyamide forming a part or the whole of a hard segment include a polyamide synthesized by using a monomer represented by the following Formula (1) or Formula (2).

Formula (1): H₂N-R₁-COOH

In Formula (1), R¹ represents a molecular chain of an aliphatic hydrocarbon (preferably saturated aliphatic hydrocarbon) having from 2 to 20 carbon atoms, or an alkylene group having from 2 to 20 carbon atoms.

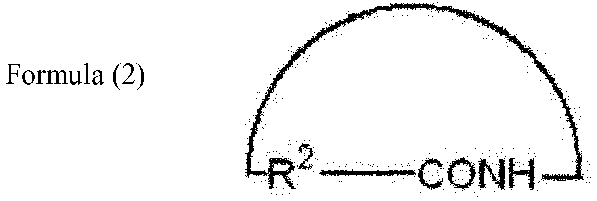

In Formula (2), R² represents a molecular chain of an aliphatic hydrocarbon (preferably saturated aliphatic hydrocarbon) having from 3 to 20 carbon atoms, or an alkylene group having from 3 to 20 carbon atoms.

In Formula (1), R¹ represents preferably a molecular chain of an aliphatic hydrocarbon having from 3 to 18 carbon atoms or an alkylene group having from 3 to 18 carbon atoms, more preferably a molecular chain of an aliphatic hydrocarbon having from 4 to 15 carbon atoms or an alkylene group having from 4 to 15 carbon atoms, and particularly preferably a molecular chain of an aliphatic hydrocarbon having from 10 to 15 carbon atoms or an alkylene group having from 10 to 15 carbon atoms. In Formula (2), R² represents preferably a molecular chain of an aliphatic hydrocarbon having from 3 to 18 carbon atoms or an alkylene group having from 3 to 18 carbon atoms, more preferably a molecular chain of an aliphatic hydrocarbon having from 4 to 15 carbon atoms or an alkylene group having from 4 to 15 carbon atoms, and particularly preferably a molecular chain of an aliphatic hydrocarbon having from 10 to 15 carbon atoms or an alkylene group having from 10 to 15 carbon atoms.

Examples of a monomer represented by Formula (1) or Formula (2) include a ω-aminocarboxylic acid and a lactam. Examples of the polyamide forming a part or the whole of a hard segment include a polycondensate of a ω-aminocarboxylic acid, a polycondensate of a lactam, and a co-polycondensate of a diamine and a dicarboxylic acid.

Examples of the ω-aminocarboxylic acid include an aliphatic ω-aminocarboxylic acid having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples of the lactam include an aliphatic lactam having from 5 to 20 carbon atoms, such as lauryl lactam, ε-caprolactam, undecanelactam, ω-enantholactam, or 2-pyrrolidone.

Examples of the diamine include diamine compounds such as an aliphatic diamine having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, or 3-methylpentamethylenediamine. The dicarboxylic acid may be represented by HOOC-(R³)m-COOH, wherein R³ represents a hydrocarbon molecular chain having from 3 to 20 carbon atoms, and m represents 0 or 1. Examples of the dicarboxylic acid include an aliphatic dicarboxylic acid having from 2 to 22 carbon atoms, such as oxalic acid, succinic acid, glutaric acid, adipic acid, pimelic acid, suberic acid, azelaic acid, sebacic acid, or dodecanedioic acid.

Examples of the polyamide forming a part or the whole of a hard segment include a polyamide (polyamide 6) obtained by ring-opening polycondensation of ε-caprolactam, a polyamide (polyamide 11) obtained by ring-opening polycondensation of undecanelactam, a polyamide (polyamide 12) obtained by ring-opening polycondensation of lauryl lactam, a polyamide (polyamide 12) obtained by polycondensation of 12-aminododecanoic acid, and a polycondensate polyamide (polyamide 66) of a diamine and a dibasic acid.

Polyamide 6 can be expressed by, for example, {CO-(CH₂)₅-NH}ₙ, wherein n represents the number of repeating units, which may be freely set. Here, n is preferably from 2 to 100, and more preferably from 3 to 50.

Polyamide 11 can be expressed by, for example, {CO-(CH₂)₁₀-NH}ₙ, wherein n represents the number of repeating units, which may be freely set. Here, n is preferably from 2 to 100, and more preferably from 3 to 50.

Polyamide 12 can be expressed by, for example, {CO-(CH₂)₁₁-NH}ₙ, wherein n represents the number of repeating units, which may be freely set. Here, n is preferably from 2 to 100, and more preferably from 3 to 50.

Polyamide 66 can be expressed by, for example, {CO(CH₂)₄CONH(CH₂)₆NH}ₙ, wherein n represents the number of repeating unit, which may be freely set. Here, n is preferably from 2 to 100, and more preferably from 3 to 50.

The polyamide-based thermoplastic elastomer preferably includes a polyamide (polyamide 12) having a unit structure represented by -[CO-(CH₂)₁₁-NH]- as a hard segment. As mentioned above, polyamide 12 may be obtained by ring-opening polycondensation of lauryl lactam or polycondensation of 12-aminododecanoic acid.

The polyamide-based thermoplastic elastomer preferably includes, as a hard segment, at least one selected from the group consisting of a polyamide (polyamide 12) having a unit structure represented by -[CO-(CH₂)₁₁-NH]- and a polyamide (polyamide 6) having a unit structure represented by -[CO-(CH₂)₅-NH]-, from the viewpoint of low-loss property and fittability to a rim.

The number average molecular weight of the polymer (polyamide) forming a part or the whole of a hard segment is preferably from 300 to 15,000 from the viewpoint of the melt molding property.

### - Soft Segment -

Examples of polymer forming a part or the whole of a soft segment (i.e., a polymer compound forming a soft segment) includes a polyester and a polyether, such as polyethylene glycol, polypropylene glycol, polytetramethylene ether glycol (PTMG), or an ABA-type triblock polyether,. These may be used singly, or in combination of two or more thereof.

A polymer which forms a part or the whole of a soft segment may have a functional group introduced to a terminal thereof. The functional group should only be reactive with a terminal group of a compound (e.g., polymer forming a hard segment, a chain extender, *etc*.), which is to be reacted with the polymer forming a soft segment. For example, in a case in which a terminal group of a compound to be reacted with a polymer forming a soft segment is a carboxy group, the functional group may be an amino group. For example, in a case in which a terminal group of a compound to be reacted with a polymer forming a soft segment is an amino group, the functional group may be a carboxy group.

Examples of a polymer having an amino group introduced to a terminal among the polymers forming a part or the whole of a soft segment include a polyether diamine reacted with ammonia at the terminals of a polyether, and specific examples thereof include an ABA-type triblock polyether diamine. Meanwhile, examples of a polymer having a carboxy group introduced to a terminal among the polymers forming a part or the whole of a soft segment include a polyether dicarboxylic acid derived by oxidizing hydroxyl groups at the terminals of a polyether to carboxy groups, and specific examples thereof include an ABA-type triblock polyether dicarboxylic acid.

Herein, the "ABA-type triblock polyethers" may be a polyether represented by the following Formula (3). 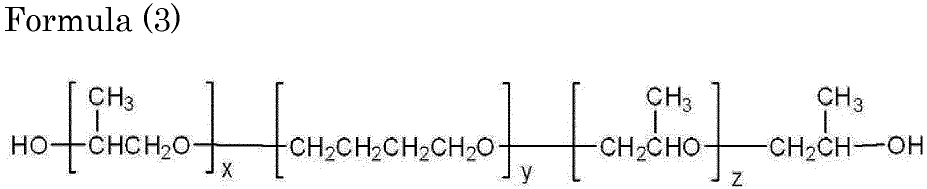 In Formula (3), each of x and z independently represents an integer from 1 to 20, and y represents an integer from 4 to 50.

In Formula (3), each of x and z is preferably an integer from 1 to 18, and more preferably an integer from 1 to 16, particularly preferably an integer from 1 to 14, and most preferably an integer from 1 to 12. In Formula (3), y is preferably an integer from 5 to 45, more preferably an integer from 6 to 40, particularly preferably an integer 7 to 35, and most preferably an integer from 8 to 30.

The "ABA-type triblock polyether diamine" may be a polyether diamine represented by the following Formula (N). 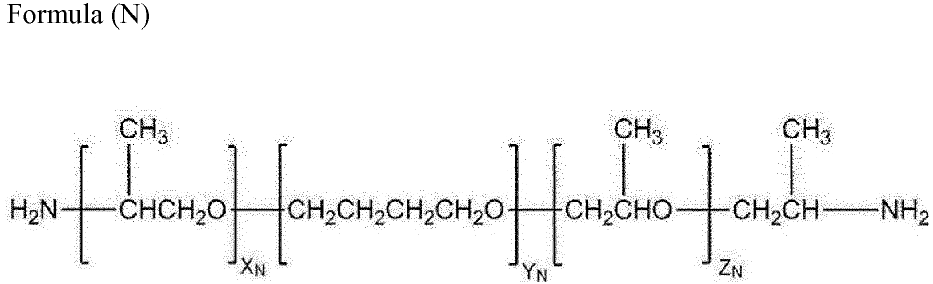 In Formula (N), each of X_{N} and Z_{N} independently represents an integer from 1 to 20, and Y_{N} represents an integer from 4 to 50.

In Formula (N), each of X_{N} and Z_{N} is preferably an integer from 1 to 18, more preferably an integer from 1 to 16, particularly preferably an integer from 1 to 14, and most preferably an integer from 1 to 12. In Formula (N), Y_{N} is preferably an integer from 5 to 45, more preferably an integer from 6 to 40, particularly preferably an integer from 7 to 35, and most preferably an integer from 8 to 30.

The polymer forming a part or the whole of a soft segment may include a diamine, such as a branched saturated diamine having from 6 to 22 carbon atoms, a branched alicyclic diamine having from 6 to 16 carbon atoms, or norbornane diamine, as a monomer unit. A branched saturated diamine having from 6 to 22 carbon atoms, a branched alicyclic diamine having from 6 to 16 carbon atoms, and norbornane diamine may be used singly, or in combination of two or more thereof. These diamines are preferably used in combination with the ABA-type triblock polyether or the ABA-type triblock polyether diamine described above.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentanemethylamine and 5-amino-1,3,3-trimethylcyclohexane methyl amine. Each of these diamines may be in the cis-form or the trans-form, or a mixture of these isomers.

Examples of the norbornane diamine include 2,5-norbornane dimethyl amine, 2,6-norbornane dimethyl amine, and a mixture thereof.

The polymer forming a part or the whole of a soft segment may include other diamine compounds than those described above, as monomer units. Examples of other diamine compounds include an aliphatic diamine such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, or 3-methylpentanemethylene diamine, an alicyclic diamine such as bis(4-aminocyclohexyl)methane, bis(4-aminocyclohexyl)propane, 1,3-bis(aminomethyl)cyclohexane, or 1,4- bis(aminomethyl)cyclohexane, and an aromatic diamine such as metaxylylene diamine or paraxylylene diamine.

These diamines may be used singly, or in combination of two or more thereof, as appropriate.

However, from the viewpoint of light resistance, a polymer forming a part or the whole of a soft segment preferably contains no aromatic ring.

The weight average molecular weight of a polymer forming a part or the whole of a soft segment is preferably from 200 to 6,000, more preferably from 1,000 to 6,000, and particularly preferably from 3,000 to 6,000, from the viewpoint of high toughness and low temperature flexibility.

The combination of a hard segment and a soft segment is, for example, a combination of any of the above examples of a hard segment and any of the above examples of a soft segment. Among them, the combination of a hard segment and a soft segment is preferably a combination of a ring-opening polycondensate of lauryl lactam and poly(ethylene glycol), a combination of a ring-opening polycondensate of lauryl lactam and poly(propylene glycol), a combination of a ring-opening polycondensate of lauryl lactam and poly(tetramethylene ether)glycol, a combination of a ring-opening polycondensate of lauryl lactam and an ABA-type triblock polyether, a combination of a ring-opening polycondensate of lauryl lactam and an ABA-type triblock polyether diamine, a combination of a polycondensate of aminododecanoic acid and poly(ethylene glycol), a combination of a polycondensate of aminododecanoic acid and poly(propylene glycol), a combination of a polycondensate of aminododecanoic acid and poly(tetramethylene ether)glycol, a combination of a polycondensate of aminododecanoic acid and an ABA-type triblock polyether, or a combination of a polycondensate of aminododecanoic acid and an ABA-type triblock polyether diamine; and particularly preferably a combination of a ring-opening polycondensate of lauryl lactam and an ABA-type triblock polyether, a combination of a ring-opening polycondensate of lauryl lactam and an ABA-type triblock polyether diamine, a combination of a polycondensate of aminododecanoic acid and an ABA-type triblock polyether, or a combination of a polycondensate of aminododecanoic acid and an ABA-type triblock polyether diamine.

### - Connection Portion -

As described above, the connection portion in the polyamide-based thermoplastic elastomer is, for example, a moiety bound by a chain extender containing an aromatic ring.

Examples of the chain extender containing an aromatic ring include an aromatic dicarboxylic acid and a derivative thereof, an aromatic diamine, an aromatic diol, and an aromatic diisocyanate.

Specific examples of an aromatic dicarboxylic acid include phthalic acid, isophthalic acid, terephthalic acid, phenylenediacetic acid, naphthalenedicarboxylic acid (such as 2,6-naphthalenedicarboxylic acid, 2,7-naphthalenedicarboxylic acid, 1,4-naphthalenedicarboxylic acid, or 2,3-naphthalenedicarboxylic acid), biphenyldicarboxylic acid (such as 4,4-biphenyldicarboxylic acid or 2,2-biphenyldicarboxylic acid), anthracenedicarboxylic acid (such as 2,6-anthracenedicarboxylic acid or 2,7-anthracenedicarboxylic acid), pyrenedicarboxylic acid (such as 4,8-pyrenedicarboxylic acid or 1,6-pyrenedicarboxylic acid), triphenylenedicarboxylic acid (such as 2,7-triphenylenedicarboxylic acid or 1,7-triphenylenedicarboxylic acid), and porphyrin dicarboxylic acid (such as 21H,23H-porphyrin-2,12-dicarboxylic acid.).

Specific examples of an aromatic diamine include *o*-phenylenediamine, *m*-phenylenediamine, *p*-phenylenediamine, *m*-xylylenediamine, *p*-xylylenediamine, 1,4-naphthalenediamine, 1,5-naphthalenediamine, 2,6-naphthalenediamine, 2,7-naphthalenediamine, and anthracene-9,10-diacetic acid.

Specific examples of an aromatic diol include *o*-dihydroxybenzene, *m*-dihydroxybenzene, *p*-dihydroxybenzene, 1,4-naphthalenediol, 1,5-naphthalenediol, 2,6-naphthalenediol, 2,7-naphthalenediol, bisphenol A, an ethylene oxide adduct of bisphenol A, a propylene oxide adduct of bisphenol A, and 9,10-dihydroxymethylanthracene.

Specific examples of an aromatic diisocyanate include 1,5-naphthalene diisocyanate, 4,4'-diphenylmethane diisocyanate, 4,4'-diphenyl dimethylmethane diisocyanate, 1,3-phenylene diisocyanate, 1,4-phenylene diisocyanate, 2,4-tolylene diisocyanate, 2,6-tolylene diisocyanate, xylylene diisocyanate, tetramethylxylylene diisocyanate, 2,6-diisopropylphenyl isocyanate, and 1,3,5-triisopropylbenzene-2,4-diisocyanate.

### - Molecular Weight -

The weight average molecular weight of a polyamide-based thermoplastic elastomer is, for example, from 15,700 to 200,000. When the weight average molecular weight of a polyamide-based thermoplastic elastomer is less than 15,700, the fittability to a rim may be reduced. When the weight average molecular weight of the polyamide-based thermoplastic elastomer exceeds 200,000, the melt viscosity increases and it may be necessary to increase forming temperature and mold temperature in order to prevent insufficient filling in the production of a tire frame,. In a case in which the forming temperature and the mold temperature are increased to prevent insufficient filling, the cycle time becomes longer and productivity is decreased.

The weight average molecular weight of the polyamide-based thermoplastic elastomer is preferably from 20,000 to 160,000. The weight average molecular weight of the polyamide-based thermoplastic elastomer can be measured by Gel Permeation Chromatography (GPC), using, for example, a GPC (Gel Permeation Chromatography) system such as "HLC-8320 GPC EcoSEC" available from TOSOH CORPORATION. The same applies to the weight average molecular weight of other thermoplastic elastomers as described below.

The mass ratio (HS/SS) of the hard segment (HS) to the soft segment (SS) in the polyamide-based thermoplastic elastomer is preferably from 30/70 to 90/10 from the viewpoint of molding property, and more preferably from 40/60 to 80/20, further more preferably from 50/50 to 70/30, and particularly preferably from 54/46 to 64/36, from the viewpoint of fittability to a rim and low-loss property.

The content of the hard segment in the polyamide-based thermoplastic elastomer is preferably from 5 to 95% by mass, more preferably from 10 to 90% by mass, and particularly preferably from 15 to 90% by mass, with respect to the total amount of the polyamide-based thermoplastic elastomer.

The content of the soft segment in the polyamide-based thermoplastic elastomer is preferably from 10 to 95% by mass, more preferably from 10 to 90% by mass, and particularly preferably from 10 to 90% by mass, with respect to the total amount of the polyamide-based thermoplastic elastomer.

In a case in which the chain extender is used, the content thereof is preferably set so that the terminal groups (such as a hydroxyl group or an amino group) of a polymer forming a soft segment and the groups (such as a carboxyl group) in a chain extender which are to be bonded to the terminal groups of a soft segment, are substantially equimolar.

A polyamide-based thermoplastic elastomer may have a connection portion that does not contain an aromatic ring, in addition to the connection portion containing an aromatic ring. The proportion (mass ratio) of a connection portion containing an aromatic ring with respect to the total amount of the connection portions in a polyamide-based thermoplastic elastomer is, for example, from 1% by mass to 100% by mass, and preferably from 3% by mass to 100% by mass.

### - Production Method -

The polyamide-based thermoplastic elastomer can be synthesized by polymerizing, by a known method, a polymer forming a part or the whole of a hard segment and a polymer forming a part or the whole of a soft segment, using a chain extender.

For example, the polyamide-based thermoplastic elastomer may be obtained by polymerizing a monomer which is a constituent of a hard segment (for example, a ω-aminocarboxylic acid such as 12-aminododecanoic acid, and lactam such as lauryl lactam) and a chain extender (such as adipic acid or decanedicarboxylic acid) in a vessel, and then further polymerizing with the addition of a polymer forming a part or the whole of a soft segment (for example, poly(propylene glycol), an ABA-type triblock polyether, and diamine derived therefrom by modifying the terminal to an amino group).

In particular, in a case in which a ω-aminocarboxylic acid is used as a monomer forming a part or the whole of a hard segment, the synthesis can be done by performing melt-polymerization at ambient pressure, or melt-polymerization at ambient pressure followed by melt-polymerization at reduced pressure. In a case in which lactam is used as a monomer forming a part or the whole of a hard segment, the elastomer can be manufactured by a method consisting of melt polymerization under a pressure of from 0.1 to 5MPa with the coexistence of an appropriate amount of water, followed by melt-polymerization at ambient pressure and/or melt-polymerization at reduced pressure. These synthetic reactions can be performed either in a batch method or in a continuous method. For the above-mentioned synthetic reactions, a batch type reaction tank, a single-tank type or multi-tank type continuous reaction apparatus, a tube-shaped continuous reaction apparatus may be used singly or in combination thereof, as appropriate.

In manufacturing the polyamide-based thermoplastic elastomer, polymerization temperature is preferably from 150 to 300 °C, and more preferably from 160 to 280 °C. Polymerization time may be appropriately determined in view of the relation between the average molecular weight of a polyamide-based thermoplastic elastomer to be synthesized and the polymerization temperature thereof, and is preferably from 0.5 to 30 hours, and more preferably from 0.5 to 20 hours.

In manufacturing the polyamide-based thermoplastic elastomer, an additive such as a monoamine or diamine, such as lauryl amine, stearylamine, hexamethylene diamine, or metaxylylene diamine; or a monocarboxylic acid or dicarboxylic acid, such as acetic acid, benzoic acid, stearic acid, adipic acid, sebacic acid, or dodecanedioic acid may be added in order to adjust the molecular weight and stabilize melt viscosity during mold processing, as needed. The additive may be appropriately selected in consideration of properties such as molecular weight or viscosity of a polyamide-based thermoplastic elastomer to be obtained so long as the additive does not adversely affect the advantageous effects of the invention.

In manufacturing the polyamide-based thermoplastic elastomer, a catalyst may be used, if necessary. Examples of the catalyst include a compound containing at least one selected from the group consisting of P, Ti, Ge, Zn, Fe, Sn, Mn, Co, Zr, V, Ir, La, Ce, Li, Ca, and Hf.

Examples of the catalyst include inorganic phosphoric compounds, organic titanium compounds, organic zirconium compounds, and organotin compounds.

Specifically, examples of the inorganic phosphoric compounds include a phosphor-containing acid such as phosphoric acid, pyrophosphoric acid, polyphosphoric acid, phosphorous acid, or hypophosphorous acid; an alkali metal salt of the phosphor-containing acid; and an alkaline earth metal salt of the phosphor-containing acid.

Examples of the organic titanium compounds include a titanium alkoxide (such as titanium tetrabutoxide, or titanium tetraisopropoxide).

Examples of the organic zirconium compounds include a zirconium alkoxide such as zirconium tetrabutoxide (also referred to as "Zr(OBu)₄" or "Zr(OC₄H₈)₄").

Examples of the organotin compounds include a distannoxane compound (such as 1-hydroxy-3-isothiocyanate-1,1,3,3-tetrabutyl distannoxane), tin acetate, dibutyl tin dilaurate, and butyltin hydroxide oxide hydrate.

The amount of the catalyst to be added and the timing of the addition thereof are not particularly limited, as long as a target product is rapidly obtained under the conditions.

Examples of the polyamide-based thermoplastic elastomer include one in which a hard segment has a polyamide structure, a soft segment has a polyether structure, and a connection portion is a structural unit derived from an aromatic dicarboxylic acid or an aromatic diamine.

The polyamide-based thermoplastic elastomer is preferably one in which a hard segment is a structural unit derived from a polyamide synthesized using a monomer represented by Formula (1) or Formula (2) described above, a soft segment is a structural unit derived from a polyether having a hydroxyl group or an amino group at a terminal thereof, and a connection portion is a structural unit derived from an aromatic dicarboxylic acid; or one in which a hard segment is a structural unit derived from a polyamide synthesized using a monomer represented by Formula (1) or Formula (2) described above, a soft segment is a structural unit derived from a polyether having a carboxy group at a terminal thereof, and a connection portion is a structural unit derived from an aromatic diamine.

Specific examples of the polyamide-based thermoplastic elastomer preferably include a combination of a ring-opening polycondensate of lauryl lactam, poly(ethylene glycol), and terephthalic acid; a combination of a ring-opening polycondensate of lauryl lactam, poly(propylene glycol), and terephthalic acid; a combination of a ring-opening polycondensate of lauryl lactam, poly(tetramethylene ether)glycol, and terephthalic acid; a combination of a ring-opening polycondensate of lauryl lactam, an ABA-type triblock polyether, and terephthalic acid; a combination of a ring-opening polycondensate of lauryl lactam, an ABA-type triblock polyether diamine, and 2,6-anthracenedicarboxylic acid; a combination of a ring-opening polycondensate of lauryl lactam, poly(ethylene glycol), and 2,6-anthracenedicarboxylic acid; a combination of a ring-opening polycondensate of lauryl lactam, poly(propylene glycol), and 2,6-anthracenedicarboxylic acid; a combination of a ring-opening polycondensate of lauryl lactam, poly(tetramethylene ether)glycol, and 2,6-anthracenedicarboxylic acid; a combination of a ring-opening polycondensate of lauryl lactam, an ABA-type triblock polyether, and 2,6-anthracenedicarboxylic acid; a combination of a ring-opening polycondensate of lauryl lactam, an ABA-type triblock polyether diamine, and 2,6-anthracenedicarboxylic acid; the combination of a polycondensate of aminododecanoic acid, poly(ethylene glycol), and terephthalic acid; a combination of a polycondensate of aminododecanoic acid, poly(propylene glycol), and terephthalic acid; a combination of a polycondensate of aminododecanoic acid, poly(tetramethylene ether)glycol, and terephthalic acid; a combination of a polycondensate of aminododecanoic acid, an ABA-type triblock polyether, and terephthalic acid; a combination of a polycondensate of aminododecanoic acid, an ABA-type triblock polyether diamine, and terephthalic acid; a combination of a polycondensate of aminododecanoic acid, poly(ethylene glycol), and 2,6-anthracenedicarboxylic acid; a combination of a polycondensate of aminododecanoic acid, poly(propylene glycol), and 2,6-anthracenedicarboxylic acid; a combination of a polycondensate of aminododecanoic acid, poly(tetramethylene ether)glycol, and 2,6-anthracenedicarboxylic acid; a combination of a polycondensation product of aminododecanoic acid, an ABA-type triblock polyether, and 2,6-anthracenedicarboxylic acid; and a combination of a polycondensate of aminododecanoic acid, an ABA-type triblock polyether diamine, and 2,6-anthracenedicarboxylic acid. Specific examples thereof particularly preferably include a combination of a ring-opening polycondensate of lauryl lactam, an ABA-type triblock polyether, and terephthalic acid; a combination of a polycondensate of aminododecanoic acid, an ABA-type triblock polyether, and terephthalic acid; a combination of a polycondensate of aminododecanoic acid, an ABA-type triblock polyether diamine, and 2,6-anthracenedicarboxylic acid; a combination of a polycondensate of aminododecanoic acid, poly(tetramethylene ether)glycol, and terephthalic acid; and a combination of a polycondensate of aminododecanoic acid, poly(tetramethylene ether)glycol, and 2,6-anthracenedicarboxylic acid.

As the polyamide-based thermoplastic elastomer, a combination of preferred aspects may be used in which the combination, the constitutional ratio, the molecular weight of structural units are described above.

Also disclosed is a (Polyester-based Thermoplastic Elastomer)

As used herein, the term "polyester-based thermoplastic elastomer" means a thermoplastic elastomer consisting of a copolymer including a polymer which forms a crystalline hard segment having a high melting point and a polymer which forms a non-crystalline soft segment having a low glass transition temperature, in which the polymer which forms a hard segment contains an ester bond (-COO-) in a backbone thereof.

Examples of the polyester-based thermoplastic elastomers include a material in which a polyester forms a part or the whole of a hard segment which is crystalline and has a high melting point, and another polymer (for example, polyester or polyether) forms a part or the whole of a soft segment which is non-crystalline and has a low glass transition temperature.

### - Hard Segment -

As a crystalline polyester which forms a part or the whole of a hard segment in the polyester-based thermoplastic elastomer, an aliphatic polyester may be used. The aliphatic polyester can be formed from, for example, an aliphatic dicarboxylic acid or an ester-forming derivative thereof, and an aliphatic diol.

Examples of a suitable aliphatic polyester forming a part or the whole of a hard segment include a polyester derived from an aliphatic dicarboxylic acid and an aliphatic diol. Specific examples thereof include a polyester derived from an aliphatic dicarboxylic acid component (such as dodecanedioic acid, adipic acid, pimelic acid, nonanedioic acid, suberic acid, sebacic acid, or an ester-forming derivative thereof), and an aliphatic diol having a molecular weight of 300 or less (for example, an aliphatic diol such as ethylene glycol, trimethylene glycol, pentamethylene glycol, hexamethylene glycol, neopentyl glycol, or decamethylene glycol, an alicyclic diol such as 1,4-cyclohexanedimethanol or tricyclodecanedimethylol) or a polymer of an aliphatic diol (such as poly(propylene glycol); or a polyester copolymer obtained using a combination of two or more kinds of the dicarboxylic acid components and the diol components. Examples of suitable aliphatic polyester forming a part or the whole of a hard segment include those obtained by copolymerization of a multifunctional carboxylic acid component, a multifunctional oxy acid component, a multifunctional hydroxyl component which are trifunctional or higher multifunctional, in a range of 5% by mol or less with respect to the entire aliphatic polyester.

Specific examples of aliphatic polyester forming a part or the whole of a hard segment include a polyester obtained by reacting dodecane diol and dodecanedioic acid, a polyester obtained by reacting hexane diol and adipic acid, a polyester obtained by reacting a PBT which is carboxylated at both ends thereof and a PPG which is hydroxylated at both ends thereof, and a polyester obtained by reacting poly(propylene glycol) and dodecanedioic acid. Among them, a polyester obtained by reacting poly(propylene glycol) and dodecanedioic acid is preferable.

The number average molecular weight of the polymer (polyester) forming a part or the whole of a hard segment is preferably from 300 to 6,000 from the viewpoint of the toughness and the low temperature flexibility.

### - Soft Segment -

Examples of a polymer forming a part or the whole of a soft segment include a polymer selected from, for example, an aliphatic polyester or an aliphatic polyether.

Examples of aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide adduct of poly(propylene oxide)glycol, and a copolymer of ethylene oxide and tetrahydrofuran.

Examples of aliphatic polyester include poly(ε-caprolactone), polyenantholactone, polycaprylolactone, polybutylene adipate, and polyethylene adipate.

Among these aliphatic polyethers and aliphatic polyesters, poly(tetramethylene oxide)glycol, an ethylene oxide adduct of poly(propylene oxide)glycol, poly(ε-caprolactone), polybutylene adipate, polyethylene adipate are preferable from the viewpoint of the elastic property of the obtained copolymer.

The weight average molecular weight of a polymer forming a part or the whole of a soft segment is preferably from 300 to 6,000 from the viewpoint of the toughness and low temperature flexibility.

### - Connection Portion -

The connection portion may be, for example, a moiety bound by a chain extender containing an aromatic ring. Examples of a chain extender include those described above, and, among them, an aromatic dicarboxylic acid is particularly preferable as a chain extender of a polyester-based thermoplastic elastomer from the viewpoint of reactivity.

### - Molecular Weight -

The weight average molecular weight of a polyester-based thermoplastic elastomer is, for example, from 15,700 to 200,000, and preferably from 20,000 to 200,000, from the viewpoint of fittability to a rim and productivity.

In a polyester-based thermoplastic elastomer, the mass ratio (HS/SS) of a hard segment (HS) to a soft segment (SS) is preferably from 30/70 to 90/10 from the viewpoint of moldability, and more preferably from 40/60 to 80/20, and particularly preferably from 50/50 to 70/30, from the viewpoint of fittability to a rim and low-loss property.

### - Production Method -

The polyester-based thermoplastic elastomer can be synthesized by copolymerizing a polymer forming a part or the whole of a hard segment and a polymer forming a part or the whole of a soft segment, using a chain extender by a known method.

Also disclosed is a (Polyurethane-based Thermoplastic Elastomer)

The polyurethane-based thermoplastic elastomer may be a material in which at least a polyurethane forms a part or the whole of a hard segment which forms a pseudo-crosslink by physical aggregation and in which another polymer forms a part or the whole of a soft segment that is non-crystalline and has a low glass transition temperature, and the material may be represented as, for example, a copolymer including a soft segment including a unit structure represented by the following Formula A and a hard segment including a unit structure represented by the following Formula B.

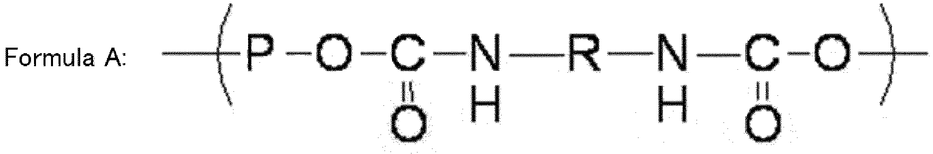

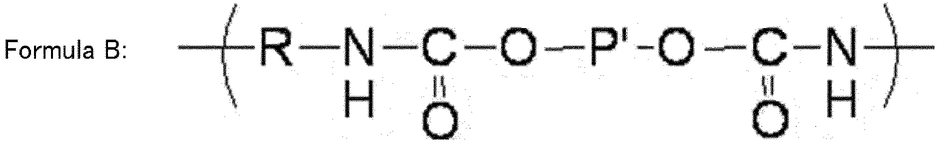

### - Soft Segment -

In Formula A, P represents a long-chain aliphatic polyether or a long-chain aliphatic polyester. In Formula A or Formula B, R represents an aliphatic hydrocarbon or an alicyclic hydrocarbon. In Formula B, P' represents a short-chain aliphatic hydrocarbon or an alicyclic hydrocarbon.

In Formula A, the long-chain aliphatic polyether or long-chain aliphatic polyester represented by P may be one having a molecular weight of from 500 to 5,000. P is derived from a diol compound including the long-chain aliphatic polyether or long-chain aliphatic polyester represented by P. Examples of such a diol compound include polyethylene glycol, polypropylene glycol, polytetramethylene ether glycol, poly(butylene adipate)diol, poly-ε-caprolactonediol, poly(hexamethylene carbonate)diol, and the ABA-type triblock polyether, each of which has a molecular weight within the above-described range.

These may be used singly, or in combination of two or more thereof.

In Formula A, R is derived from a diisocyanate compound including the aliphatic hydrocarbon or alicyclic hydrocarbon represented by R. Examples of an aliphatic diisocyanate compound containing an aliphatic hydrocarbon represented by R include 1,2-ethylene diisocyanate, 1,3-propylene diisocyanate, 1,4-butane diisocyanate, and 1,6-hexamethylene diisocyanate.

Examples of a diisocyanate compound containing an alicyclic hydrocarbon represented by R include 1,4-cyclohexane diisocyanate, and 4,4-cyclohexane diisocyanate.

These may be used singly, or in combination of two or more thereof.

The weight average molecular weight of a polymer forming a part or the whole of a soft segment is preferably from 500 to 20,000, more preferably from 500 to 5,000, and particularly preferably from 500 to 3,000, from the viewpoint of the flexibility and thermal stability of a polyurethane-based thermoplastic elastomer.

### - Hard Segment -

In Formula B, the short chain aliphatic hydrocarbon or alicyclic hydrocarbon represented by P' may be one which has a molecular weight of less than 500. P' is derived from a diol compound including a short-chain aliphatic hydrocarbon or an alicyclic hydrocarbon represented by P'. Examples of an aliphatic diol compound containing a short-chain aliphatic hydrocarbon represented by P' include a glycol and a poly(alkylene glycol), such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, or 1,10-decanediol.

Examples of an alicyclic diol compound containing an alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

These may be used singly, or in combination of two or more thereof.

R in Formula B has the same definitions as R in Formula A.

The number average molecular weight of a polymer (polyurethane) forming a part or the whole of a hard segment is preferably from 300 to 1,500 from the viewpoint of melt moldability.

### - Connection Portion -

The connection portion is, for example, a moiety bonded with a chain extender containing an aromatic ring. Examples of a chain extender include those described above, and, among them, the aromatic diol is particularly preferable as a chain extender of a polyurethane-based thermoplastic elastomer from the viewpoint of reactivity.

### - Molecular Weight -

The weight average molecular weight of a polyurethane-based thermoplastic elastomer is, for example, from 15,700 to 200,000, and preferably from 20,000 to 200,000, from the viewpoint of fittability to a rim and productivity.

In a polyurethane-based thermoplastic elastomer, the mass ratio (HS/SS) of a hard segment (HS) to a soft segment (SS) is preferably from 30/70 to 90/10, more preferably from 40/60 to 80/20, and particularly preferably from 50/50 to 70/30.

### - Production Method -

The polyurethane-based thermoplastic elastomer may be synthesized by copolymerizing a polymer forming a part or the whole of a hard segment and a polymer forming a part or the whole of a soft segment, using a chain extender by a known method.

The resinous material may include various additives, as desired, such as rubber, various fillers (for example, silica, calcium carbonate, or clay), anti-aging agents, oils, plasticizers, colorants, weathering stabilizers, and reinforcing materials. The contents of the additives in the resinous material (tire frame) are not particularly limited, and the additives may be used, as appropriate, in a range in which the effect according to the invention is not impaired. When non-resinous components, such as additives, are added to the resinous material, the content of resin component in the resinous material is 50% by mass or more, and preferably 90% by mass or more, with respect to the total amount of the resinous material. The content of resin component in the resinous material is the balance remaining after subtracting the total content of the various additives from the total amount of the resin components.

### < Physical Properties of Resinous Material >

Next, preferable physical properties of the resinous material forming a part or the whole of the tire frame will be described. The tire frame is formed using the resinous material.

The melting point (or softening point) of the resinous material (tire frame) is ordinarily from 100 °C to 350 °C, and preferably from about 100 °C to about 250 °C. From the viewpoint of tire productivity, the melting point (or softening point) is preferably from about 120 °C to about 250 °C, and more preferably from 120 °C to 200 °C.

When, for example, a tire frame is formed by fusing divided parts (frame pieces) of the tire frame, use of a resinous material having a melting point of 120 °C to 250 °C provides a sufficient adhesive strength between tire frame pieces in a frame formed by fusing at a surrounding temperature of 120 °C to 250 °C. Therefore, the tire according to the invention has excellent durability at running, such as puncture resistance or wear resistance. The heating temperature described above is preferably a temperature that is 10 °C to 150 °C higher than the melting point (or softening point) of the resinous material forming a part or the whole of the tire frame, and more preferably a temperature that is 10 °C to 100 °C higher than the melting point (or softening point) of the resinous material forming a part or the whole of the tire frame.

The resinous material can be obtained by adding various additives, if necessary, and appropriately mixing the ingredients by a known method (for example, melt mixing). The resinous material obtained by melt mixing may be shaped into pellets, if necessary, and used.

The tensile strength at yield as defined in Japanese Industrial Standards (JIS) K7113:1995 of the resinous material (tire frame) itself is preferably 5 MPa or more, more preferably from 5 MPa to 20 MPa, and still more preferably from 5 MPa to 17 MPa. When the tensile strength at yield of the resinous material is 5 MPa or more, the resinous material can endure deformation due to a load applied to the tire at, for example, running.

The tensile elongation at yield as defined in JIS K7113:1995 of the resinous material (tire frame) itself is preferably 10% or more, preferably from 10% to 70%, and still more preferably from 15% to 60%. When the tensile elongation at yield of the resinous material is 10% or more, the elastic range is large, and air-sealing property can be improved.

The tensile elongation at break as defined in JIS K7113:1995 of the resinous material (tire frame) itself is preferably 50% or more, more preferably 100% or more, still more preferably 150% or more, and particularly preferably 200% or more. When the tensile elongation at break of the resinous material is 50% or more, fittability to a rim is excellent, and the tire is resistant to breakage upon impact.

The deflection temperature under load as defined in ISO75-2 or ASTM D648 of the resinous material (tire frame) itself (under a load of 0.45 MPa) is preferably 50 °C or higher, preferably from 50 °C to 150 °C, and more preferably from 50 °C to 130 °C. When the deflection temperature under load of the resinous material is 50 °C or higher, deformation of the tire frame can be reduced even when vulcanization is performed in tire production.

### [First Embodiment]

A tire according to a first embodiment of the invention is described below with reference to drawings.

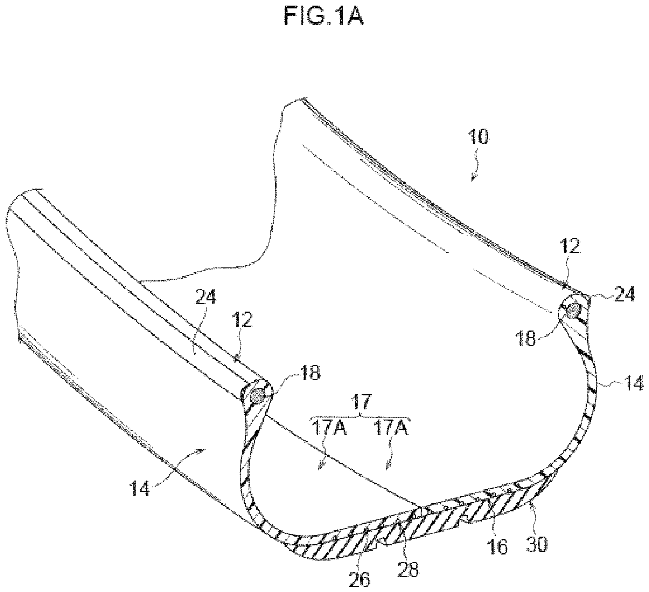

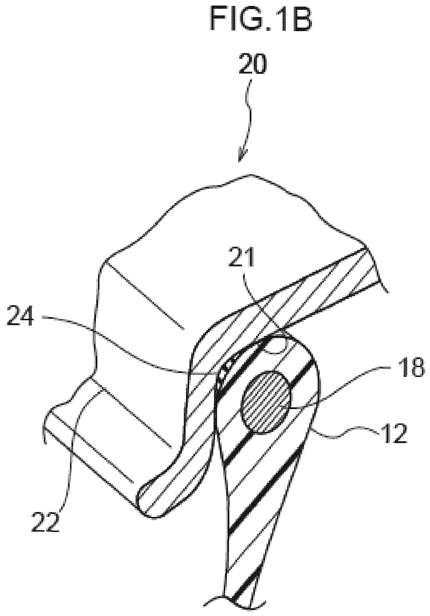

A tire 10 according to this embodiment is described below. FIG. 1A is a perspective view illustrating a cross-section of a part of a tire according to one embodiment of the invention, and FIG. 1B is a cross-sectional view of a bead portion mounted on a rim. As illustrated in FIG. 1A, the tire 10 according to the present embodiment has a cross-sectional shape that is substantially similar to those of conventional ordinary pneumatic rubber tires.

As illustrated in FIG. 1A, the tire 10 includes a tire case (tire frame) 17 that includes: a pair of bead portions 12 that contact a bead sheet portion 21 and a rim flange 22 of a rim 20 illustrated in FIG. 1B; side portions 14 that each outwardly extend from a bead portion 12 in the tire radial direction; and a crown portion (outer circumferential portion) 16 that connects the tire-radial-direction outer end of one side portion 14 and the tire-radial-direction outer end of the other side portion 14.

In the tire case 17 according to the present Embodiment, a resinous material including a thermoplastic elastomer that includes a hard segment that does not contain an aromatic ring, a soft segment, and a connection portion which contains an aromatic ring and connects the hard segment and the soft segment, in which any additive may be added, may be used.

Although the tire case 17 is made of a single resinous material in the present embodiment, the invention is not limited to this configuration, and thermoplastic resinous materials having different properties may be used for the respective parts of the tire case 17 (for example, side portions 14, a crown portion 16, and bead portions 12), similar to conventional ordinary rubber pneumatic tires. Further, a reinforcing member (for example, a polymer or metal fiber, cord, non-woven fabric, or woven fabric) may be embedded in the tire case 17 (for example, in the bead portions 12, in the side portions 14 or in the crown portion 16), so as to reinforce the tire case 17 with the reinforcing member.

The tire case 17 according to the present embodiment is a member obtained by joining together a pair of tire case half parts (tire frame pieces) 17A formed only of a resinous material. Each tire case half part 17A is formed by producing an integrated body composed of one bead portion 12, one side portion 14 and a half-width part of the crown portion 16 by molding such as injection molding. The tire case 17 is formed by disposing the formed tire case half parts 17A, which have the same annular shape, to face to each other, and joining them together at the tire equatorial plane. The tire case 17 is not limited to those obtained by joining together two members, and may be formed by joining together three or more members.

Each of the tire case half parts 17A formed using at least the above-described resinous material may be shaped using, for example, vacuum molding, pressure forming, injection molding or melt casting. Therefore, vulcanization is unnecessary, the production process can greatly be simplified, and the forming time can be saved, as compared to the case of forming a tire case with rubber as in conventional techniques.

In the present embodiment, the tire case half parts 17A have a bilaterally symmetric shape, i.e., one of the tire case half parts 17A has the same shape as the other tire case half part 17A. Therefore, there is also an advantage in that only one type of mold is required for forming the tire case half parts 17A.

In the present embodiment, an annular bead core 18 made only of a steel cord similar to those used in conventional ordinary pneumatic tires is embedded in each of the bead portions 12, as illustrated in Fig. 1B. However, the invention is not limited to this configuration, and the bead core 18 may be omitted as long as it is ensured that the bead portion 12 has rigidity, and mounting on the rim 20 can be performed successfully. The bead core 18 may alternatively be formed using, for example, an organic fiber cord, a resin-coated organic fiber cord, or a hard resin, instead of a steel cord.

In the present embodiment, an annular sealing layer 24 formed of a material (for example, rubber) having a higher sealing property than that of the resinous material forming a part or the whole of the tire case 17 is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resinous material that forms a part or the whole of the tire case 17 may be used as the material having a higher sealing property than that of the resinous material that forms a part or the whole of the tire case 17. As rubbers usable for the sealing layer 24, the same types of rubbers as the rubbers used on the outer surfaces of the bead portions of conventional ordinary pneumatic rubber tires are preferably used. Another thermoplastic resin (thermoplastic elastomer) having a higher sealing property than that of the resinous material may be used. Examples of another thermoplastic resin include a polyurethane-based resin, a polyolefin-based resin, a polystyrene-based thermoplastic resin, or a polyester resin, or a blend of any of these resins with a rubber or an elastomer. It is also possible to use a thermoplastic elastomer, such as a polyester-based thermoplastic elastomer, a polyurethane-based thermoplastic elastomer, a polystyrene-based thermoplastic elastomer, a polyolefin-based thermoplastic elastomer, or a combination of two or more of these elastomers or a blend of any of these elastomers with a rubber.

As illustrated in Fig. 1A, a reinforcing cord 26 having a higher rigidity than that of the resinous material forming a part or the whole of the tire case 17 is wound around the crown portion 16 in the circumferential direction of the tire case 17. The reinforcing cord 26 is helically wound to form a reinforcing cord layer 28 in a state in which at least a part of the reinforcing cord 26 is embedded in the crown portion 16 in cross-sectional view taken along the axial direction of tire case 17. A crown 30 formed of a material (for example, rubber) having a higher wear resistance than that of the resinous material forming a part or the whole of the tire case 17 is disposed at the tire-radial-direction outer circumferential side of the reinforcing cord layer 28.

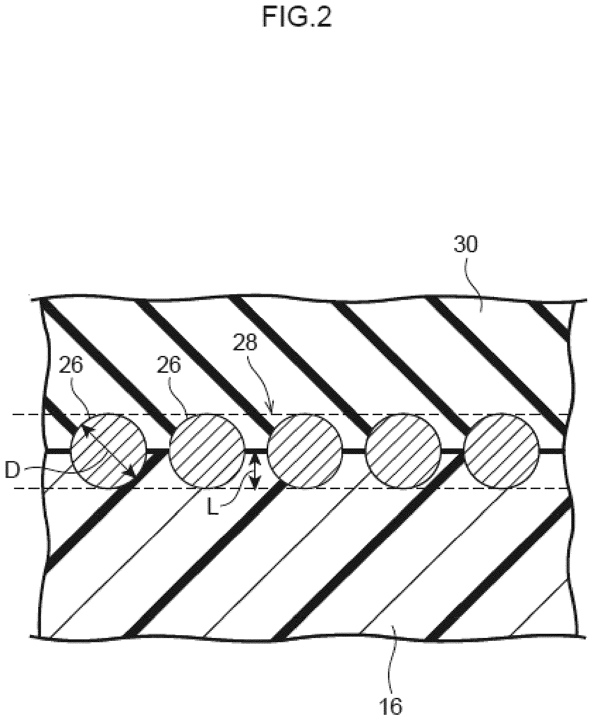

The reinforcing cord layer 28 formed by the reinforcing cord 26 is described below with reference to Fig. 2. Fig. 2 is a cross-sectional view taken along the tire rotation axis, which illustrates a state in which the reinforcing cord is embedded in the crown portion of the tire case of the tire according to the first embodiment. As illustrated in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 indicated by the intermittent lines in Fig. 2. The part of the reinforcing cord 26 that is embedded in the crown portion 16 is in close contact with the resinous material forming a part or the whole of the crown portion 16 (the tire case 17). A monofilament (single filament) of a metal fiber, an organic fiber, or a multifilament (stranded filament) in which such fibers are stranded, such as a steel cord composed of stranded steel fibers, may be used as the reinforcing cord 26. In the present embodiment, a steel cord is used as the reinforcing cord 26.

The depth L of embedding in Fig. 2 illustrates the depth of embedding of the reinforcing cord 26 in the tire case 17 (the crown portion 16) along the tire rotation axis direction. The depth L of embedding of the reinforcing cord 26 in the crown portion 16 is preferably equal to or greater than 1/5 of the diameter D of the reinforcing cord 26, and more preferably more than 1/2 of the diameter D of the reinforcing cord 26. It is most preferable that the entire reinforcing cord 26 is embedded in the crown portion 16. When the depth L of embedding of the reinforcing cord 26 is more than 1/2 of the diameter D of the reinforcing cord 26, the reinforcing cord 26 is difficult to drop off from the embedded portion due to the dimensions of the reinforcing cord 26. When the entire reinforcing cord 26 is embedded in the crown portion 16, the surface (the outer circumferential surface) becomes flat, whereby entry of air into an area around the reinforcing cord can be reduced even when a member is placed on the crown portion 16 in which the reinforcing cord 26 is embedded. The reinforcing cord layer 28 corresponds to a belt disposed on the outer circumferential surface of a carcass of a conventional pneumatic rubber tire.

As described above, a tread 30 is disposed on the tire-radial-direction outer circumferential side of the reinforcing cord layer 28. It is preferable that the same type of rubber as that used for conventional pneumatic rubber tires is used as the rubber used for the tread 30. A tread formed of another type of resinous material having higher wear resistance than that of the resinous material forming a part or the whole of the tire case 17 may be used, in place of the tread 30. In the tread 30, a tread pattern composed of plural grooves is formed on the contact surface that comes into contact with a road surface, similar to conventional pneumatic rubber tires.

A method of producing a tire according the present embodiment is described below.

### (Tire Case Forming Process)

First, tire case half parts are formed using a resinous material including the thermoplastic resin elastomer, as described above. The forming of these tire cases is preferably performed using injection-molding. Then, the tire case half parts supported by thin metal support rings are aligned to face each other. Subsequently, a joining mold (not illustrated in the drawings) is placed so as to contact the outer circumferential surface of a butt portion of the tire case half parts. The joining mold is configured to pressurize a region at or around the joint portion (the butt portion) of the tire case half parts 17A with a predetermined pressure. Then, the pressure is applied to the region at or around the joint portion of the tire case half parts at a temperature equal to higher than the melting point (or softening point) of the resinous material that forms a part or the whole of the tire case. When the joint portion of the tire case half parts is heated and pressurized by the joining mold, the joint portion is melted, and the tire case half parts are fused with each other, as a result of which the members are integrated to form the tire case 17. Although joint portion of the tire case half parts is heated using the joining mold in the present embodiment, the invention is not limited thereto; heating of the joint portion may be carried out using, for example, a separately provided high frequency heater, or the tire case half parts may be bonded by softening or melting the joint portion, in advance, via application of hot air, irradiation with infrared radiation, and applying a pressure to the joint portion using the jointing mold.

### (Reinforcing Cord Member Winding Process)

Although not illustrated in the drawings, the reinforcing cord layer 28 can be formed on the outer circumferential side of the crown portion 16 of the tire case 17 by embedding while winding the heated reinforcing cord 26 around the outer circumferential surface of the crown portion 16, using a cord feeding apparatus equipped with a reel on which a reinforcing cord 26 is wound, a cord heating device, various rollers.

In this way, a reinforcing cord layer 28 is formed on the outer circumferential side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

Then, a belt-shaped vulcanized tread 30 is wound on the outer circumferential surface of the tire case 17 for one revolution, and the tread 30 is bonded to the outer circumferential surface of tire case 17 using, for example, an adhesive. For example, precured treads known thus far for used in retreated tires may be used as the tread 30. The present process is a process similar to the process of bonding a precured tread to the outer circumferential surface of a casting of a retreaded tire.

A tire 10 can be completed by bonding a sealing layer 24 formed only of a vulcanized rubber to the bead portion 12 of the tire case 17 using, for example, an adhesive.

### (Effects)

The tire 10 according to an embodiment includes a tire case 17 formed from a resinous material including a thermoplastic elastomer which includes a hard segment that does not contain an aromatic ring, a soft segment, and a connection portion containing an aromatic ring and connecting the hard segment and the soft segment. Accordingly, the tire 10 of the embodiment has improved low-loss properties and improved fittability to a rim.

In the tire 10 according to an embodiment, the reinforcing cord 26 having higher stiffness than the resinous material is helically wound in the circumferential direction around the outer circumferential surface of the crown portion 16 of the tire case 17 made of the resinous material, whereby puncture resistance, cut resistance, and stiffness in the circumferential direction of the tire 10 are improved. The improvement in stiffness in the circumferential direction of tire 10 prevents the creeping of the tire case 17 made of the resinous material.

Furthermore, since at least a part of the reinforcing cord 26 is embedded in the outer circumferential surface of the crown portion 16 of the tire case 17 formed from the resinous material and is closely adhered to the resinous material in the cross-sectional view taken along the axial direction of the tire case 17 (the cross-section illustrated in FIG. 1A), entry of air during production is reduced, and the displacement of the reinforcing cord 26, for example, due to applied force during running is reduced. As a result, for example, abrasion of the reinforcing cord 26, the tire case 17, and the tread 30 is reduced, resulting in the improvement in durability of the tire 10.

Furthermore, since the depth L of embedding of the reinforcing cord 26 is 1/5 or more of the diameter D as illustrated in FIG. 2, entry of air during production is efficiently reduced, and the displacement of the reinforcing cord 26, for example, due to applied force during running is further suppressed.

Moreover, since the annular bead core 18 made of a metal material is embedded in the bead portion 12, the tire case 17 or the tire 10 is robustly supported on the rim 20 as in the case of conventional pneumatic rubber tires.

Furthermore, since the sealing layer 24 formed of a rubber material having a superior sealing property than that of the resinous material forming a part or the whole of the tire case 17 is provided on a part of the bead portion 12 that contacts the rim 20, sealing property between the tire 10 and the rim 20 is improved. Consequently, the air leaking within the tire is further reduced, as compared to a case in which the tire is sealed only with the rim 20 and the resinous material forming a part or the whole of the tire case 17. In addition, the installation of the sealing layer 24 also improves the fittability to a rim.

Although the first embodiment is configured such that the reinforcing cord 26 is heated, an embodiment in which the outer circumference of the reinforcing cord 26 may be covered, for example, using the same resinous material as the tire case 17 may be employed. In this case, the covering resinous material is heated together with the reinforcing cord 26 when the covered reinforcing cord is wound around the crown portion 16 of the tire case 17, whereby entry of air during the embedment of the reinforcing cord into the crown portion 16 can be efficiently reduced.

The reinforcing cord 26 is helically wound from the easiness in production. However, the reinforcing cord 26 may be wound in another method in which the reinforcing cord 26 is discontinuous in the width direction of the tire.

Although the tire 10 according to the first embodiment is a so-called tubeless tire in which an air room is formed between the tire 10 and the rim 20 by mounting the bead portion 12 on the rim 20, the tire may have a complete tube shape.

### EXAMPLES

The invention is more specifically described below by reference to examples.

### [Example 1]

First, 44 g of 12-aminododecanoic acid (available from Aldrich), 600 g of aminododecanolactam, and 18 g of terephthalic acid (a chain extender that serves as a connection portion) were added into a reaction vessel having a capacity of 2L and equipped with a stirrer, a nitrogen gas inlet, and a condensed water discharge port. The air inside the reaction vessel was sufficiently replaced by nitrogen, and then the temperature was raised to 280 °C and a reaction was allowed to proceed for 5 hours under a pressure elevation of 0.6 MPa. After the pressure was relieved, a reaction was allowed to proceed for another 1 hour under nitrogen flow, whereby a white solid, which was a Polyamide 12 polymer having a molecular weight of 2,500, was obtained (polymerization reaction A).

The thus-obtained Polyamide 12 polymer contains a polyamide having a molecular weight of 2,500 (Polyamide 12) as a hard segment, and terephthalic acid as a chain extender bonded to one terminal of Polyamide 12.

To 250 g of the thus-obtained Polyamide 12 polymer, 196 g of polyoxypropylene diamine (PPG, available from Huntsuman Corporation, ELASTAMINE RP-2009, weight average molecular weight: 2,000) as a polymer forming a soft segment, and 71 mg of tetra-tert-butoxyzirconium were added, and the mixture was stirred for 6 hours at 230 °C (polymerization reaction B). Then, 1 g of Irganox 1010 was added thereto, thereby obtaining a white polyamide-based thermoplastic elastomer (weight average molecular weight: 80,000). The mass ratio (HS/SS) of hard segment (HS) to soft segment (SS) in the resultant polyamide-based thermoplastic elastomer was shown in Table 1 and Table 2.

The thus-obtained polyamide-based thermoplastic elastomer was formed into pellets, which were then subjected to injection-molding at 220 °C, thereby obtaining sample pieces. A variety of measurements were performed by using the samples punched out from these sample pieces as test pieces.

### [Example 2]

A white polyamide-based thermoplastic elastomer (weight average molecular weight: 76,000) was obtained in the same manner as in Example 1, except that 18 g of isophthalic acid was used instead of 18 g of terephthalic acid, and the charged amount of PPG among the various conditions for polymerization reaction B was changed from 196 g to 141 g.

### [Example 3]

A white polyamide-based thermoplastic elastomer (weight average molecular weight: 88,000) was obtained in the same manner as in Example 1, except that 21 g of phenylenediacetic acid was used instead of 18 g of terephthalic acid, and the charged amount of PPG among the various conditions for polymerization reaction B was changed from 196 g to 205 g.

### [Example 4]

A white polyamide-based thermoplastic elastomer (weight average molecular weight: 82,000) was obtained in the same manner as in Example 1, except that 43 g of 4,4'-biphenyldicarboxylic acid was used instead of 18 g of terephthalic acid, and the charged amount of PPG among the various conditions for polymerization reaction B was changed from 196 g to 205 g.

### [Example 5]

A white polyamide-based thermoplastic elastomer (weight average molecular weight: 77,000) was obtained in the same manner as in Example 1, except that 23 g of 2,6-naphthalenedicarboxylic acid was used instead of 18 g of terephthalic acid, and the charged amount of PPG among the various conditions for polymerization reaction B was changed from 196 g to 205 g.

### [Example 6]

A white polyamide-based thermoplastic elastomer (weight average molecular weight: 74,000) was obtained in the same manner as in Example 1, except that 32 g of 2,6-anthracenedicarboxylic acid was used instead of 18 g of terephthalic acid, and the charged amount of PPG among the various conditions for polymerization reaction B was changed from 196 g to 189 g.

### [Example 7]

A white polyamide-based thermoplastic elastomer (weight average molecular weight: 72,000) was obtained in the same manner as in Example 1, except that 31 g of 4,8-pyrenedicarboxylic acid was used instead of 18 g of terephthalic acid, and the charged amount of PPG among the various conditions for polymerization reaction B was changed from 196 g to 213 g.

### [Example 8]

A white polyamide-based thermoplastic elastomer (weight average molecular weight: 70,000) was obtained in the same manner as in Example 1, except that 33 g of 2,7-triphenylenedicarboxylic acid was used instead of 18 g of terephthalic acid, and the charged amount of PPG among the various conditions for polymerization reaction B was changed from 196 g to 204 g.

### [Example 9]

A white polyamide-based thermoplastic elastomer (weight average molecular weight: 85,000) was obtained in the same manner as in Example 1, except that 147 g of polyoxypropylene-poly(tetramethylene glycol)-polyoxypropylene diamine (PPG-PTMG-PPG, product name: JEFFAMINE, grade number: XTJ-548, weight average molecular weight: 1,700, available from Huntsman Corporation) was used instead of 196 g of polyoxypropylene diamine, and the charged amount of terephthalic acid among the various conditions for polymerization reaction A was changed from 18 g to 17 g.

### [Example 10]

A white polyamide-based thermoplastic elastomer (weight average molecular weight: 79,000) was obtained in the same manner as in Example 1, except that 197 g of poly(tetramethylene glycol) diamine (PTMG having aminated terminals; weight average molecular weight: 1,000) was used instead of 196 g of polyoxypropylene diamine, and the charged amount of terephthalic acid among the various conditions for polymerization reaction A was changed from 18 g to 17 g.

The PTMG having aminated terminals was obtained by a method in which a raw material, i.e., polytetramethylene glycol having hydroxyl groups at both terminals (available from Wako Pure Chemical Industries, Ltd., Manufacturer's code: 164-17745, weight average molecular weight: 2,000) was reacted with tosyl chloride for tosylation, followed by azidation with sodium azide and a reduction reaction using a platinum catalyst.

### [Example 11]

First, 500 g of caprolactam (available from Aldrich), 116 g of 2,6-naphthalenedicarboxylic acid, and 77 g of aminohexanoic acid were added into a reaction vessel having a capacity of 2 L and equipped with a stirrer, a nitrogen gas inlet, and a condensed water discharge port. The air inside the reaction vessel was sufficiently replaced by nitrogen, and then the temperature was raised to 250 °C and a reaction was allowed to proceed for 4 hours under a pressure elevation of 0.6 MPa. After the pressure was relieved, a reaction was allowed to proceed for another 1 hour under nitrogen flow, followed by a water washing process, whereby a white solid, which was a Polyamide 6 polymer having a molecular weight of 3,000, was obtained.

The thus obtained Polyamide 6 polymer contains a polyamide having a molecular weight of 3,000 (Polyamide 6) as a hard segment, and 2,6-naphthalenedicarboxylic acid as a chain extender boned to one terminal of Polyamide 6.

To 200 g of the thus-obtained Polyamide 6 polymer, 133 g of polyoxypropylene diamine (PPG, available from Huntsman Corporation, ELASTAMINE RP-2009, weight average molecular weight: 2,000) as a polymer forming a soft segment was added, and the mixture was stirred at 230 °C for 5 hours. Then, 1 g of Irganox 1010 was added thereto, thereby obtaining a white polyamide-based thermoplastic elastomer (weight average molecular weight: 80,000).

### [Comparative Example 1]

A white polyamide-based thermoplastic elastomer (weight average molecular weight: 85,000) was obtained in the same manner as in Example 1, except that 24 g of dodecanedioic acid was used instead of 18 g of terephthalic acid, and the charged amount of PPG among the various conditions for polymerization reaction B was changed from 196 g to 205 g.

### [Comparative Example 2]

A white polyamide-based thermoplastic elastomer (weight average molecular weight: 80,000) was obtained in the same manner as in Example 1, except that 18 g of 1,4-cyclohexanedicarboxylic acid was used instead of 18 g of terephthalic acid, and the charged amount of PPG among the various conditions for polymerization reaction B was changed from 196 g to 205 g.

### [Evaluation]

The thus-obtained thermoplastic elastomers were evaluated for the following items. Specifically, each of the obtained thermoplastic elastomers was formed into pellets, which was then subjected to injection-molding using an injection molding machine of "ROBOSHOT α15-C" (available from Funac Corporation) at a molding temperature of 220 °C and a mold temperature of 50 °C, thereby obtaining sample pieces. Respective measurements were carried out using test pieces punched out from the sample pieces using a die having a size of 28 mm x 100 mm x thickness 2 mm. The results are shown in Table 1 and Table 2.

### (Low Loss Property)

Loss tangent (tanδ) of samples each having a diameter of 8 mm and a thickness of 2 mm was measured at a temperature of 30 °C, distortion of 1%, and a frequency of 20 Hz using a viscoelasticity measurement device (available from Rheometric Scientific Inc). The resultant values were converted into indices with the tan δ obtained for a sample of Comparative Example 1 being 100, and evaluated as "A" when the index was 195 or less, as "B" when the index was higher than 195 and less than 366, and as "C" when the index was more than 366. The lower index means the better low-loss property, namely "A" is the best, and "C" is the worst.

### (Fittability to Rim)

A tire was formed using each of the thermoplastic elastomers obtained in Examples and Comparative Examples, with reference to the first embodiment described above. The tire was then mounted on a rim. A case in which the air-sealing property was ensured was evaluated as "A", a case in which fitting was difficult and handling property was poor was evaluated as "B", and a case in which the air-sealing property was not ensured was evaluated as "C".

### (Heat Resistance)

The melt onset temperature of each of the obtained samples was measured by raising the temperature from 0 °C to 200 °C with an increase of 10 °C /min, using a differential scanning calorimeter (DSC) (DSC Q2000, available from TA Instruments Japan Inc.). A case in which the melt onset temperature was 155 °C or higher was evaluated as "A", a case in which the melt onset temperature was 147 °C or higher and less than 155 °C was evaluated as "B", and a case in which the melt onset temperature was less than 147 °C was evaluated as "C".

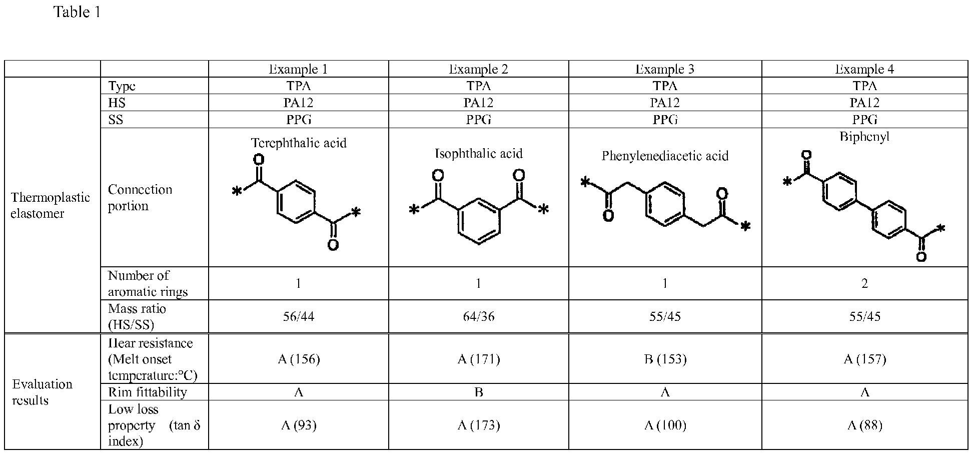

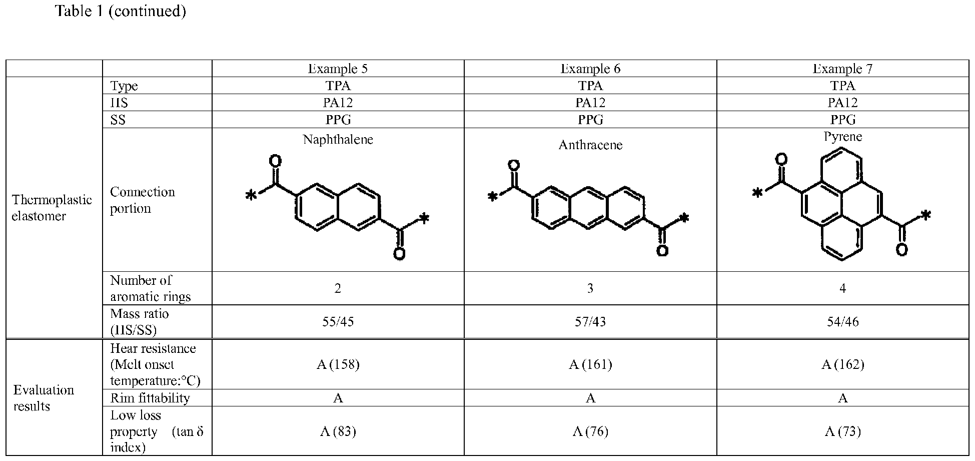

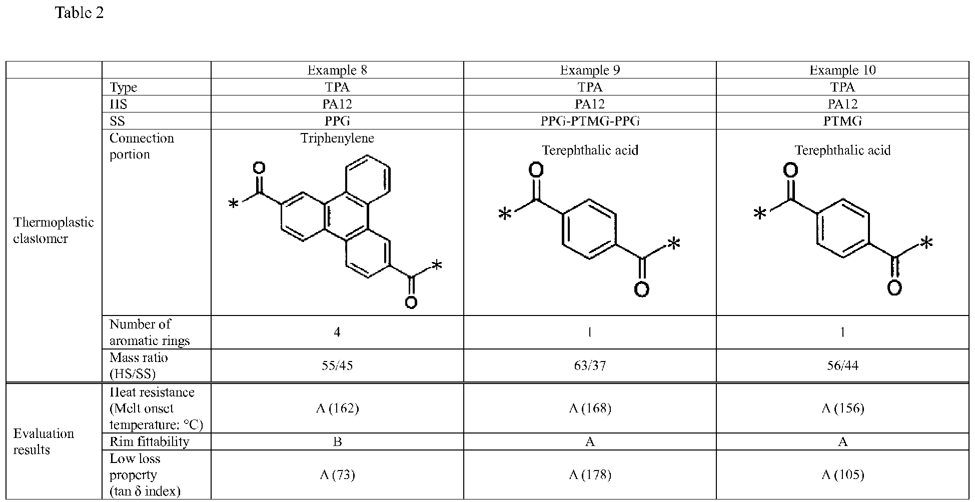

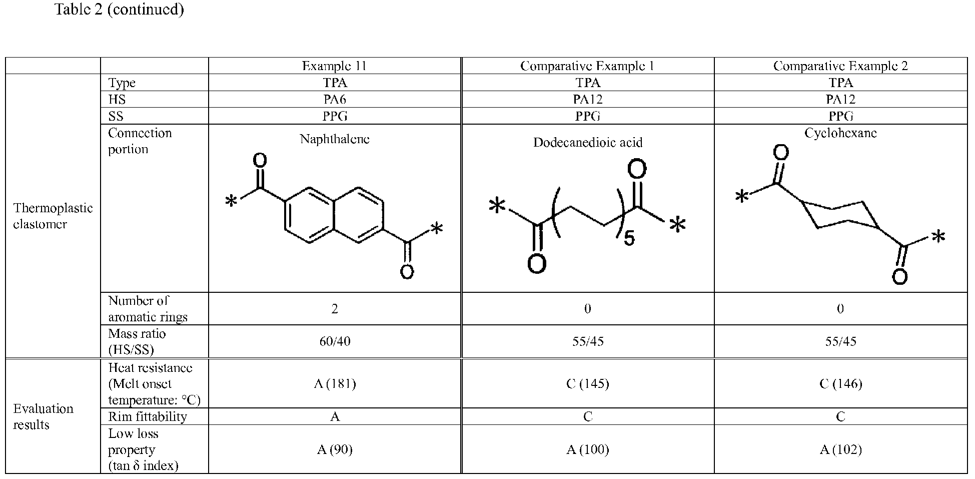

In Table 1 and Table 2, "HS" refers to a hard segment, and "SS" refers to a soft segment.

In Table 1 and Table 2, "PA12" means that the segment is derived from Polyamide 12, "PA6" means that the segment is derived from Polyamide 6, "PPG" means that the segment is derived from poly(propylene glycol), and "PTMG" means that the segment is derived from poly(tetramethylene ether)glycol. Moreover, "PPG-PTMG-PPG" refers to a ternary copolymer containing a structural unit derived from PTMG and structural units derived from PPG.

As shown in Table 1 and Table 2, in the Examples in which a thermoplastic elastomer including a hard segment that does not contain an aromatic ring, a soft segment, and a connection portion containing an aromatic ring is used, better balance between the low-loss properties and fittability to a rim was achieved as compared to Comparative Examples in which a thermoplastic elastomer including a connection portion that does not contain an aromatic ring is used.

## Claims

1. A tire comprising a circular tire frame formed from a resinous material,
the resinous material comprising a resin component,
the resin component comprising a thermoplastic elastomer,
the thermoplastic elastomer comprising: a hard segment that does not comprise an aromatic ring; a soft segment; and a connection portion that comprises an aromatic ring and that connects the hard segment and the soft segment,
the hard segment comprising a polyamide structure,
the soft segment comprising a polyether structure, and
the resin component being comprised in an amount of 50% by mass or more with respect to a total amount of the resinous material.

2. The tire according to claim 1, wherein the connection portion comprises 1 to 4 aromatic rings.

3. The tire according to claim 1 or claim 2, wherein a mass ratio (HS/SS) between the hard segment (HS) and the soft segment (SS) is from 30/70 to 90/10.

4. The tire according to any one of claims 1 to 3, wherein the connection portion comprises a structural unit derived from a diamine or a structural unit derived from a dicarboxylic acid.

5. The tire according to any one of claims 1 to 4, wherein the connection portion comprises a structural unit derived from a dicarboxylic acid.

6. The tire according to any one of claims 1 to 5, wherein the resinous material consists of the thermoplastic elastomer.

## Patentansprüche

1. Reifen, umfassend einen kreisförmigen Reifenrahmen, der aus einem Harzmaterial gebildet ist,
wobei das Harzmaterial eine Harzkomponente umfasst,
wobei die Harzkomponente ein thermoplastisches Elastomer umfasst,
wobei das thermoplastische Elastomer folgendes umfasst: ein hartes Segment, das keinen aromatischen Ring umfasst; ein weiches Segment; und einen Verbindungsabschnitt, der einen aromatischen Ring umfasst, und das harte Segment mit dem weichen Segment verbindet,
wobei das harte Segment eine Polyamidstruktur umfasst,
wobei das weiche Segment eine Polyetherstruktur umfasst, und
wobei die Harzkomponente in einer Menge von 50 Masse-% oder mehr enthalten ist, in Bezug auf eine Gesamtmenge des harzartigen Materials.

2. Reifen nach Anspruch 1, wobei der Verbindungsabschnitt 1 bis 4 aromatische Ringe umfasst.

3. Reifen nach Anspruch 1 oder Anspruch 2, wobei ein Masseverhältnis (HS/SS) zwischen dem harten Segment (HS) und dem weichen Segment (SS) von 30/70 bis 90/10 beträgt.

4. Reifen nach einem der Ansprüche 1 bis 3, worin der Verbindungsabschnitt eine von einem Diamin abgeleitete Struktureinheit oder eine von einer Dicarbonsäure abgeleitete Struktureinheit umfasst.

5. Reifen nach einem der Ansprüche 1 bis 4, worin der Verbindungsabschnitt eine von einer Dicarbonsäure abgeleitete Struktureinheit umfasst.

6. Reifen nach einem der Ansprüche 1 bis 5, worin das Harzmaterial aus dem thermoplastischen Elastomer besteht.

## Revendications

1. Pneumatique comprenant une carcasse de pneumatique circulaire en matériau résineux,
le matériau résineux comprenant un composant de résine,
le composant de résine comprenant un élastomère thermoplastique,
l'élastomère thermoplastique comprenant: un segment dur qui ne comprend pas d'anneau aromatique; un segment souple; et une partie de connexion qui comprend un anneau aromatique et qui relie le segment dur et le segment souple,
le segment dur comprenant une structure en polyamide,
le segment souple comprenant une structure polyéther, et
le composant de résine étant compris en une quantité de 50% en masse ou plus par rapport à une quantité totale du matériau résineux.

2. Pneumatique selon la revendication 1, dans lequel la partie de connexion comprend 1 à 4 anneaux aromatiques.

3. Pneumatique selon la revendication 1 ou la revendication 2, dans lequel un rapport en masse (HS/SS) entre le segment dur (HS) et le segment souple (SS) est compris entre 30/70 et 90/10.

4. Pneumatique selon l'une quelconque des revendications 1 à 3, dans lequel la partie de connexion comprend une unité structurelle dérivée d'une diamine ou une unité structurelle dérivée d'un acide dicarboxylique.

5. Pneumatique selon l'une quelconque des revendications 1 à 4, dans lequel la partie de connexion comprend une unité structurelle dérivée d'un acide dicarboxylique.

6. Pneumatique selon l'une quelconque des revendications 1 à 5, dans lequel le matériau résineux est constitué de l'élastomère thermoplastique.
